# EUROPEAN PATENT APPLICATION

(11) **EP 1 327 655 A1**
(43) Date of publication of application: **16.07.2003**
(21) Application number: 02000591.4
(22) Date of filing: 10.01.2002
(51) Int. Cl.: C08J 9/00, C08L 23/06

(54) **Expanded polyethylene sheet**

(71) Applicant: Lin, Bo-Hon, Chang Huahsien, Taiwan (TW)
(72) Inventor: Lin, Bo-Hon, Chang Huahsien, Taiwan (TW)
(74) Representative: Leson, Thomas Johannes Alois, Dipl.-Ing.

(57) **Abstract**

A material is made by mixing polyethylene, calcium carbonate, and foaming agent at 150 to 200 degrees Celsius. The material can be rolled to be plates so as to be machined to different products. The rate in weight of the polyethylene, the calcium carbonate and the foaming agent is 49.8% to 97.8%, 2% to 50%, and 0.2% respectively. Products that made by the material can be burned to be powder which is friendly to the environment.

## Description

### FIELD OF THE INVENTION

The present invention relates to a material made by mixing polyethylene, calcium carbonate, hydrogen peroxide and foaming agent. The material becomes powder after being burned.

### BACKGROUND OF THE INVENTION

Many of the things for everyday use such as shopping bags, plates, and shoe insoles is made of plastic material. These products are discarded after being used and the plastic material is difficult to be degraded and which is a burden for the environment. Most of the countries burn garbage to reduce the volume thereof and the plastic material generates toxic substances during burning process.

The present invention intends to provide a material that meets the requirement of the environment protection.

### SUMMARY OF THE INVENTION

The present invention relates to a material is made by mixing polyethylene, calcium carbonate, and foaming agent at 150 to 200 degrees Celsius. The material can be burned to be powder.

The primary object of the present invention is to provide a material that is easily to be manufactured and becomes powder after being burned.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 shows steps of making shoe insole and bowl by the material of the present invention;
Fig. 2 shows a machine for making plates made of the the present invention;
Fig. 3 shows the material is rolled to be plates;
Fig. 4 shows a machine to make bowls from the material of the present invention, and
Fig. 5 shows a machine to make shoe insoles from the material of the present invention.

### DETAILED DESCRIPTION OF THE PREFERRED EMBODIMENT

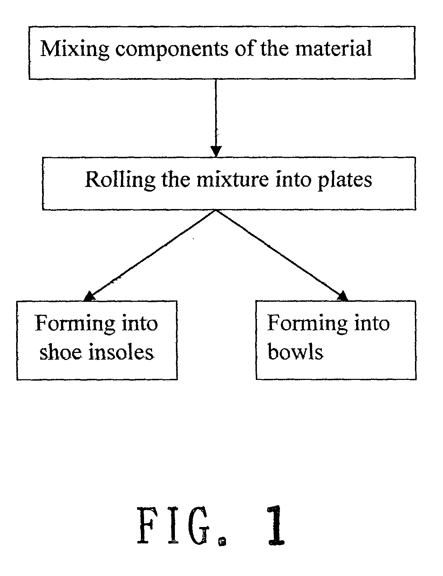

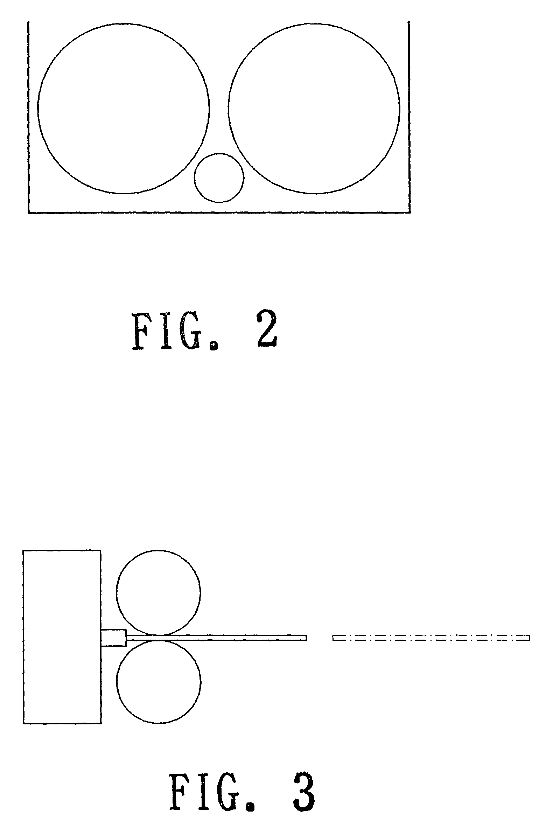

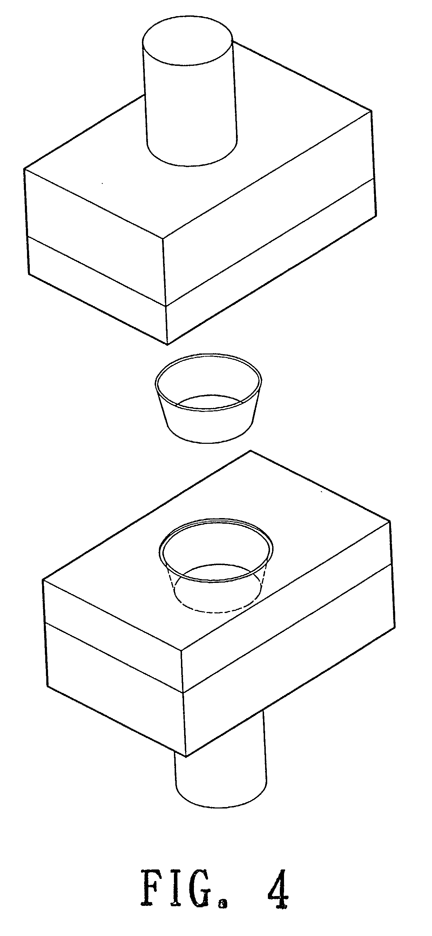

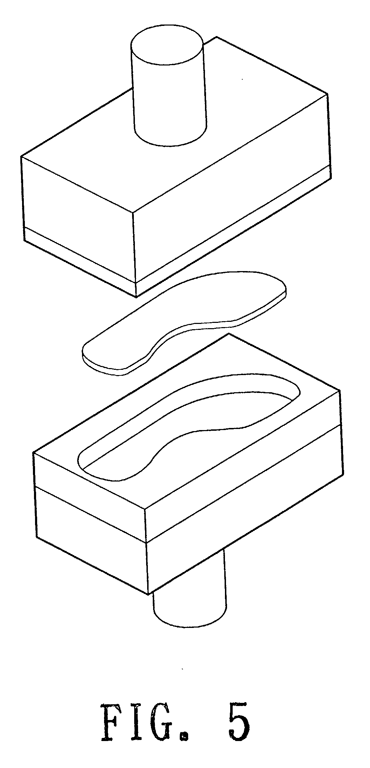

Referring to Fig. 1, the material is made by mixing 69.8% of polyethylene, 30% of calcium carbonate, and 0.2% of foaming agent at 150 to 200 degrees Celsius. The material is rolled by a machine into plates as shown in Figs. 2 and 3. The plates has at least 1 mm in thickness. The plates can then be pressed as bowls as shown in Fig. 4 and shoe insoles as shown in Fig. 5.

These products made by the material of the present invention becomes powder after being burned directly. The powder is not harmful to the environment.

### Embodiment 1:

Mixing 69.8 grams of polyethylene, 30 grams of calcium carbonate, and 0.2 grams of hydrogen peroxide at 150 degrees Celsius. The mixture is then rolled into plates with 1 mm thickness and the plates can be pressed to be bowls.

### Embodiment 2:

Mixing 49.8 grams of polyethylene, 50 grams of calcium carbonate, and 0.2 grams of hydrogen peroxide at 150 degrees Celsius. The mixture is then rolled into plates with 1 mm thickness and the plates can be pressed to be bowls.

### Embodiment 3:

Mixing 97.8 grams of polyethylene, 2 grams of calcium carbonate, and 0.2 grams of hydrogen peroxide at 150 degrees Celsius. The mixture is then rolled into plates with 1 mm thickness and the plates can be pressed to be bowls.

### Embodiment 4:

Mixing 69.8 grams of polyethylene, 30 grams of calcium carbonate, and 0.2 grams of hydrogen peroxide at 150 degrees Celsius. The mixture is then rolled into plates with 1 mm thickness and the plates can be pressed to be shoe insoles.

While we have shown and described the embodiment in accordance with the present invention, it should be clear to those skilled in the art that further embodiments may be made without departing from the scope of the present invention.

A material is made by mixing polyethylene, calcium carbonate, and foaming agent at 150 to 200 degrees Celsius. The material can be rolled to be plates so as to be machined to different products. The rate in weight of the polyethylene, the calcium carbonate and the foaming agent is 49.8% to 97.8%, 2% to 50%, and 0.2% respectively. Products that made by the material can be burned to be powder which is friendly to the environment.

## Claims

1. A material being made by mixing polyethylene, calcium carbonate, and foaming agent at 150 to 200 degrees Celsius.

2. The material as claimed in claim 1, wherein the rate in weight of the polyethylene, the calcium carbonate and the foaming agent is 49.8% to 97.8%, 2% to 50%, and 0.2% respectively.

3. The material as claimed in claim 1, wherein the preferred rate in weight of the polyethylene and the calcium carbonate is 69.8% and 30% respectively.

4. The material as claimed in claim 1 wherein the mixture of the material is rolled to be a plate with at least 1 mm in thickness.

5. The material as claimed in claim 1 wherein the foaming agent is peroxide.

6. The material as claimed in claim 5, wherein the peroxide is hydrogen peroxide.
